# DEMANDE DE BREVET EUROPEEN

(11) **EP 2 011 722 A1**
(43) Date de publication de la demande: **07.01.2009**
(21) Numéro de dépôt: 08158799.0
(22) Date de dépôt: 23.06.2008
(51) Int. Cl.: B62D 25/16, B62D 25/18, B62D 27/02, B62D 27/00, B62D 65/02

(54) **Raidisseur d'aile pour aile avant de véhicule automobile et aile avant comprenant un tel raidisseur d'aile**

(30) Priorité: 02.07.2007 FR 0756207
(71) Demandeur: PEUGEOT CITROËN AUTOMOBILES S.A., 78140 Vélizy Villacoublay (FR)
(72) Inventeur: Brefort, Laurent, 78280, GUYANCOURT (FR)
(74) Mandataire: Allain, Laurent

(57) **Abrégé**

L'invention concerne un raidisseur d'aile pour aile avant de véhicule automobile et aile avant comprenant un tel raidisseur d'aile.

Ce raidisseur (1) d'aile est caractérisé en ce qu'il présente une partie de fixation (4, 5 et 6) solidarisée consécutivement avec l'aile avant (2) par des premiers moyens (4a) de fixation puis avec le support inférieur (3) par des seconds moyens (5a) de fixation, cette partie étant configurée de telle façon que les interfaces de fixation respectives avec l'aile avant (2) et le support inférieur (3) d'aile se trouvent dans des plans superposés dans la direction longitudinale du corps principal du support inférieur (3) d'aile.

Application à l'industrie automobile.

## Description

La présente invention concerne d'une façon générale la fixation d'aile sur le châssis d'un véhicule.

Plus particulièrement, la présente invention concerne un raidisseur d'aile avant reliant cette aile à un support inférieur d'aile avant.

Une aile avant de véhicule automobile est généralement fixée en plusieurs points sur le véhicule. Ces fixations comprennent une fixation supérieure avec un support supérieur d'aile, préférentiellement par vissage, une fixation avec le côté d'habitacle, préférentiellement aussi par vissage, et une fixation inférieure comprenant entre autres un raidisseur d'aile en plusieurs parties, réalisée préférentiellement par rivet ou points de soudure. Cette fixation inférieure est réalisée du fait que le raidisseur d'aile avant est lui-même fixé à un support inférieur d'aile avant.

Une telle fixation de l'aile avant sur le support inférieur requiert l'utilisation de nombreuses pièces mécaniques ce qui, du fait des multiples liaisons à réaliser entre les interfaces de ces pièces, exige une grande place.

Le but de la présente invention est de simplifier cette fixation inférieure entre l'aile avant et le support inférieur de cette aile, notamment par l'utilisation d'un raidisseur d'aile permettant de réduire la place prise par les différentes interfaces de cette fixation.

A cet effet, l'invention a pour objet un raidisseur d'aile avant d'un véhicule automobile, ce raidisseur d'aile étant fixé, d'une part, sur l'aile avant en présentant avec celle-ci une zone de contact pour la renforcer et, d'autre part, sur un support inférieur présentant un corps principal afin de fixer l'aile avant sur le châssis du véhicule automobile, caractérisé en ce qu'il présente une partie de fixation solidarisée consécutivement avec l'aile avant par des premiers moyens de fixation puis avec le support inférieur par des seconds moyens de fixation, cette partie de fixation étant configurée de telle façon que les interfaces de fixation respectives avec l'aile avant et le support inférieur d'aile se trouvent dans des plans superposés dans la direction longitudinale du corps principal du support inférieur d'aile.

Selon des caractéristiques additionnelles de la présente invention :
- la partie de fixation du raidisseur, solidarisée avec l'aile avant et le support inférieur, présente une forme en U, chaque branche du U servant d'interface de fixation avec respectivement l'aile avant et une partie terminale du support inférieur d'aile avant, recourbée en étant disposée sensiblement perpendiculairement par rapport au corps principal du support inférieur d'aile avant,
- la base du U, formée par ladite partie de fixation du raidisseur, est supportée par une partie du corps principal du support inférieur d'aile,
- en plus de la solidarisation avec l'aile par sa partie de fixation, le raidisseur d'aile comprend des troisième moyens de fixation avec l'aile avant disposés sur sa partie présentant une zone de contact avec l'aile pour la renforcer,
- cette zone de contact est localisée à la périphérie inférieure de l'aile avant et sur la partie basse de son bord latéral et la partie du raidisseur d'aile présentant la zone de contact est contenue à l'intérieur de ladite périphérie inférieure et partiellement contenue dans la partie basse du bord latéral de cette aile,
- les premiers, seconds et troisièmes moyens de fixation sont des rivets et/ou des vis et/ou des points de soudure ou éléments similaires,
- le raidisseur d'aile est réalisé d'un seul tenant,
- le raidisseur d'aile est muni d'autres évidements pour assurer des liaisons complémentaires avec l'aile avant ou d'autres éléments et/ou recevoir sans blocage d'autres éléments.

L'invention concerne aussi une aile avant d'un véhicule automobile, comportant un raidisseur d'aile et un support inférieur d'aile, cette aile étant reliée à une extrémité du support inférieur d'aile par un tel raidisseur d'aile, ce raidisseur effectuant aussi le renforcement de l'aile.

Cette aile avant peut avoir son support inférieur fixé à son autre extrémité sur la doublure d'aile avant, préférentiellement par vissage, ce support inférieur d'aile pouvant servir éventuellement pour la fixation d'autres éléments, par exemple un pare-choc directement ou par un élément de liaison comme un presseur de pare-choc.

L'invention concerne un véhicule automobile présentant au moins une telle aile.

L'invention va maintenant être décrite plus en détail mais de façon non limitative en regard des figures annexées, dans lesquelles :
- la figure 1 est une représentation schématique d'une vue en perspective sous un premier angle de vue du dessous d'une aile avant avec son raidisseur d'aile et son support inférieur conformément à l'invention,
- la figure 2 est une représentation schématique d'une vue en perspective sous un second angle de vue du dessous d'un raidisseur d'aile conformément à l'invention,
- la figure 3 est une représentation schématique en d'une vue de dessous en perspective d'un raidisseur d'aile conformément à l'invention,
- la figure 4 est une représentation schématique en vue de côté en perspective d'un raidisseur d'aile conformément à l'invention,
- la figure 5 est une représentation schématique d'une aile avant montée sur le véhicule conformément à l'invention.

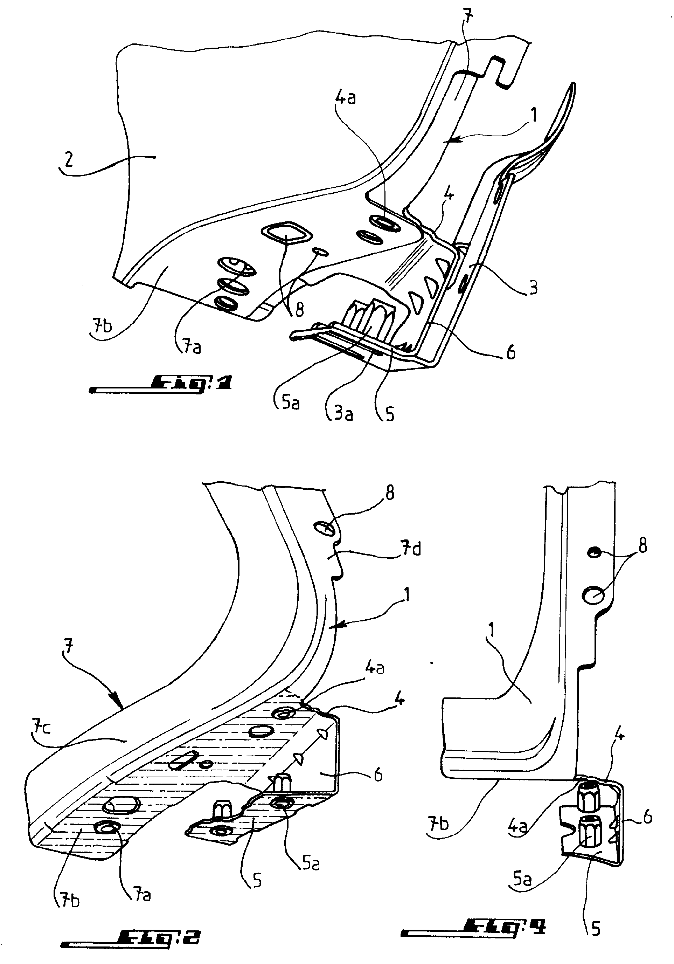

La figure 1 montre une aile avant 2 avec un raidisseur 1 d'aile. Ce raidisseur 1 d'aile est en une seule pièce comprenant une partie de fixation 4, 5 et 6 faisant la liaison entre l'aile 2 et un support inférieur 3 d'aile. Ce raidisseur 1 d'aile a une partie 7 partiellement contenue dans la périphérie inférieure de l'aile 1 formant ainsi une zone de contact avec l'aile en étant logée partiellement à l'intérieur de celle-ci.

Le support inférieur 3 d'aile présente un corps principal qui s'étend à distance de l'aile 2 vers la doublure d'aile avec laquelle il est fixé, ce support inférieur 3 présentant en outre à son extrémité opposée à celle fixée avec la doublure d'aile une partie terminale 3a recourbée à 90° par rapport à son corps principal. La fixation du support inférieur 3 avec la doublure peut servir au positionnement d'un autre élément de structure le cas échéant.

La partie de fixation 4, 5 et 6 du raidisseur 1 comprend des premiers moyens de fixation 4a pour sa fixation avec l'aile 2 et des seconds moyens de fixation 5a pour sa fixation avec le support inférieur 3 d'aile, formant ainsi des interfaces de fixation correspondantes. Conformément à la présente invention, le raidisseur 1 présente une partie de fixation 4, 5 et 6 configurée de telle façon que les interfaces de fixation respectives avec l'aile 2 et le support inférieur 3 d'aile se trouvent dans des plans superposés dans la direction longitudinale du corps principal du support inférieur 3 d'aile.

Pour ce faire, la partie de fixation 4, 5 et 6 du raidisseur 1 reliée avec l'aile avant 2 et le support inférieur 3 présente une forme en U, une 4 des branches du U servant d'interface de fixation avec l'aile 2 et l'autre branche 5 servant d'interface de fixation avec la partie terminale 3a du support inférieur 3 d'aile, recourbée en étant disposée perpendiculairement par rapport à la direction longitudinale du corps principal du support inférieur d'aile avant, la base 6 de ce U reposant sur une partie du corps principal du support inférieur 3.

Le raidisseur 1 d'aile comprend, en plus des premiers moyens 4a de fixation avec l'aile 2 et des seconds moyens 5a de fixation avec le support inférieur 3 de sa partie de fixation 4, 5 et 6, des troisièmes moyens 7a de fixation avec l'aile 2 disposés dans sa partie 7 partiellement contenue dans celle-ci pour la renforcer.

Les premiers 4a, seconds moyens 5a et troisièmes moyens 7a de fixation peuvent être réalisés sous forme de rivets, de points de soudure ou de vis ou des éléments similaires.

Les figures 2 à 4 montrent un raidisseur d'aile selon la présente invention sous divers angles de vue pour mieux détailler ses divers éléments.

La partie 7 du raidisseur 2, partiellement contenue dans l'aile, présente une base 7b et un côté 7c, totalement contenus dans l'aile 2. La base 7b et le côté 7c sont contenus dans la périphérie inférieure de l'aile 2 afin d'effectuer une action de renforcement de celle-ci. Ensuite le côté 7c est recourbé pour suivre la forme de l'aile 2 sur le côté latéral de celle-ci et la base 7b est diminuée en largeur pour former l'autre côté 7d du raidisseur 1, sensiblement à angle droit avec le côté 7c. Ce côté 7d est en partie contenu dans le bord latéral de l'aile 2 et en partie saillant de ce bord.

A ces figures, l'interface de fixation aile avec la première branche 4 du U du raidisseur se situe à la limite supérieure de cette branche 4 en contact avec la base 7b de la partie 7 partiellement contenue dans l'aile 2. Les interfaces de liaison respective du raidisseur 1 avec, d'une part, l'aile 2 et, d'autre part, le support inférieur 3 se trouvent dans des plans superposés mais les moyens de fixation respectifs 4a et 5a ne sont pas forcément alignés.

Sur la figure 4, il pourra être constaté que les deux interfaces de liaison de la partie de fixation 4, 5 et 6 en forme de U du raidisseur 2 avec respectivement l'aile 2 et le support inférieur 3 d'aile sont superposées ce qui permet d'intégrer ces interfaces dans un minimum de place en latéral ce qui est l'effet technique principal obtenu par les caractéristiques de la présente invention.

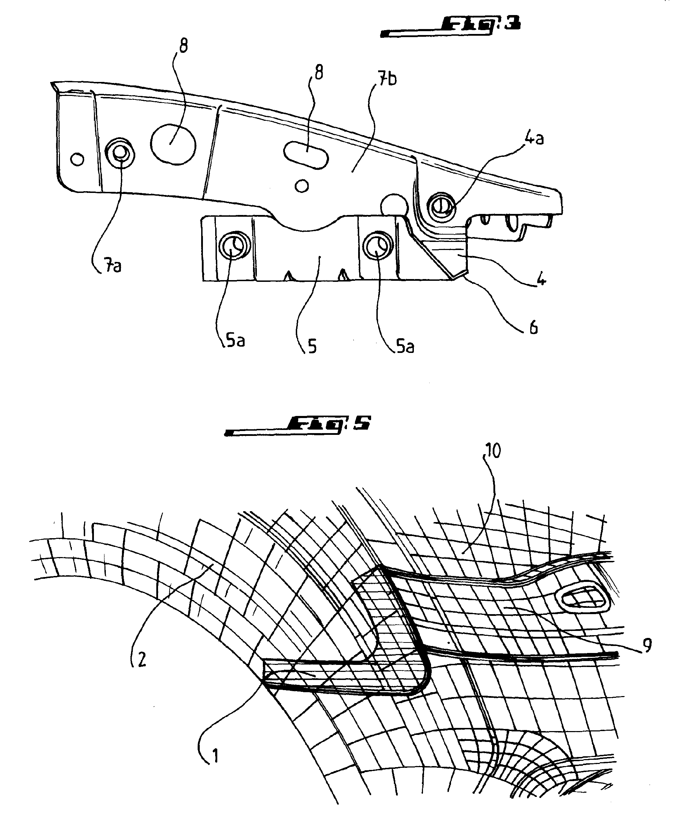

A la figure 3, la base 7b du raidisseur 2 présente d'autres évidements pour la possible fixation avec d'autres éléments du véhicule ou pour former d'autres moyens de fixation à l'aile avant 2. Ces évidements peuvent recevoir des moyens de fixation d'éléments ou simplement laisser le passage à des moyens de fixation d'autres éléments sans action de blocage sur ceux-ci.

L'invention concerne aussi une aile avant 2 de véhicule automobile comportant un raidisseur 1 d'aile et un support inférieur 3 d'aile, cette aile 2 étant reliée à une extrémité de son support inférieur 3 par un raidisseur 2 d'aile tel que décrit précédemment, ce raidisseur 2 effectuant aussi le renforcement de l'aile.

Cette aile peut avoir son support inférieur 3 fixé à son autre extrémité sur la doublure d'aile avant, préférentiellement par vissage, ce support inférieur 3 d'aile pouvant servir éventuellement pour la fixation d'autres éléments, par exemple un pare-choc directement ou par un élément de liaison comme un presseur de pare-choc ou élément similaire.

La figure 5 montre le positionnement de l'aile dans la structure du véhicule vu de l'extérieur du véhicule.

Comme déjà indiqué précédemment le raidisseur d'aile est logé dans la périphérie inférieure de l'aile 2 et dans une partie de son bord latéral, pouvant par exemple se situer vers la zone de l'aile 2 à proximité du pare-choc avant 9 et en dessous du projecteur avant 10.

Les avantages principaux de la présente invention sont de parvenir à une optimisation de l'encombrement de la liaison de l'aile avec le raidisseur d'aile, d'une part, et du raidisseur d'aile avec le support inférieur d'aile, d'autre part, notamment pour la réduction de la largeur du raidisseur d'aile. Deux interfaces de liaison sont ainsi intégrées dans un minimum de place en latéral.

De plus, comme le raidisseur d'aile est réalisé d'un seul tenant, le montage de ce raidisseur d'aile sur l'aile avant en est facilité tout en améliorant la cohésion de l'ensemble raidisseur d'aile.

L'invention n'est nullement limitée au mode de réalisation décrit et illustré qui n'a été donné qu'à titre d'exemple.

## Revendications

1. Raidisseur (1) d'aile avant d'un véhicule automobile, ce raidisseur (1) étant fixé, d'une part, sur l'aile (2) avant en présentant avec celle-ci une zone de contact pour la renforcer et, d'autre part, sur un support inférieur (3) présentant un corps principal afin de fixer l'aile (2) avant sur le châssis du véhicule automobile, **caractérisé en ce qu'**il présente une partie de fixation (4, 5 et 6) solidarisée consécutivement avec l'aile avant (2) par des premiers moyens (4a) de fixation puis avec le support inférieur (3) par des seconds moyens (5a) de fixation, cette partie de fixation (4, 5 et 6) étant configurée de telle façon que les interfaces de fixation respectives avec l'aile avant (2) et le support inférieur (3) d'aile se trouvent dans des plans superposés dans la direction longitudinale du corps principal du support inférieur (3) d'aile.

2. Raidisseur d'aile (1) selon la revendication 1, **caractérisé en ce que** la partie de fixation (4, 5 et 6) solidarisée avec l'aile avant (2) et le support inférieur (3) présente une forme en U, chaque branche (4, 5) du U servant d'interface de fixation avec respectivement l'aile avant (2) et une partie terminale (3a) du support inférieur (3) d'aile avant, recourbée en étant disposée sensiblement perpendiculairement par rapport au corps principal du support inférieur (3) d'aile avant.

3. Raidisseur d'aile (1) selon la revendication 1 ou 2, **caractérisé en ce que** la base (6) du U, formée par ladite partie de fixation (4, 5 et 6) du raidisseur (1), est supportée sur une partie du corps principal du support inférieur (3) d'aile.

4. Raidisseur d'aile (1) selon l'une quelconque des revendications précédentes, **caractérisé en ce que**, en plus de la solidarisation avec l'aile (2) par sa partie de fixation (4, 5 et 6), il comprend des troisième moyens (7a) de fixation avec l'aile avant (2) disposés dans une partie (7) présentant une zone de contact avec l'aile (2) pour la renforcer.

5. Raidisseur d'aile (1) selon la revendication 4, **caractérisé en ce que** cette zone de contact est localisée à la périphérie inférieure de l'aile avant (2) et sur la partie basse de son bord latéral et **en ce que** la partie (7) du raidisseur (1) d'aile présentant la zone de contact est contenue à l'intérieur de ladite périphérie inférieure et partiellement contenue dans la partie basse du bord latéral de cette aile (2).

6. Raidisseur d'aile (1) selon l'une quelconque des revendications précédentes, **caractérisé en ce que** les premiers, seconds et troisièmes moyens (4a, 5a, 7a) de fixation sont des rivets et/ou des vis et/ou des points de soudure ou éléments similaires.

7. Raidisseur d'aile (1) selon l'une quelconque des revendications, **caractérisé en ce qu'**il est réalisé d'un seul tenant.

8. Raidisseur d'aile (1) selon l'une quelconque des revendications, **caractérisé en ce qu'**il est muni d'autres évidements (8) pour assurer des liaisons complémentaires avec l'aile avant (2) ou d'autres éléments et/ou recevoir sans blocage d'autres éléments.

9. Aile avant (2) d'un véhicule automobile comportant un raidisseur (1) d'aile et un support inférieur (3) d'aile **caractérisée en ce qu'**elle est reliée à une extrémité de son support inférieur (3) d'aile par un raidisseur (2) d'aile selon l'une quelconque des revendications précédentes, ce raidisseur (2) effectuant aussi le renforcement de l'aile.

10. Aile avant (2) selon la revendication 9, **caractérisée en ce que** son support inférieur (3) d'aile est fixé à son autre extrémité sur la doublure d'aile avant, préférentiellement par vissage, ce support inférieur (3) d'aile pouvant servir éventuellement pour la fixation d'autres éléments, par exemple un pare-choc directement ou par un élément de liaison comme un presseur de pare-choc.

11. Véhicule automobile présentant au moins une aile (2) selon les revendications 9 et 10.
